# EUROPÄISCHE PATENTANMELDUNG

(11) **EP 4 589 327 A1**
(43) Veröffentlichungstag der Anmeldung: **23.07.2025**
(21) Anmeldenummer: 24152208.5
(22) Anmeldetag: 16.01.2024
(51) Int. Cl.: G01S 5/02

(54) **VERFAHREN UND ORTUNGSGERÄT ZUM ORTEN VON FUNKETIKETTEN SOWIE VERFAHREN UND ANORDNUNG ZUM KONFIGURIEREN DES ORTUNGSGERÄTS**

(71) Anmelder: Siemens Aktiengesellschaft, 80333 München (DE)
(72) Erfinder: Hein, Daniel, 81549 München (DE); Häuser, Markus, 91463 Dietersheim (DE); Limmer, Steffen, 80636 München (DE); Strixner, Ferdinand, 81739 München (DE); Weber, Marc Christian, 80339 München (DE)
(74) Vertreter: Siemens Patent Attorneys

(57) **Zusammenfassung**

Es wird ein Verfahren zum Konfigurieren eines Ortungsgeräts (OG) zum Orten von Funketiketten (RF1, RF2) vorgeschlagen, wobei das Verfahren die Schritte umfasst:
a) mehrmaliges Befördern von einem oder mehreren ersten Funketiketten (RF1) unter variierten Beförderungsbedingungen durch einen ersten vorgegebenen Bereich (B1), wobei jeweils
- eine aktuelle Position (P) eines jeweiligen ersten Funketiketts (RF1) mittels eines Lokalisierungssensors (C) erfasst wird, und
- ein Funksignal des jeweiligen ersten Funketiketts (RF1) durch das Ortungsgerät (OG) empfangen und ein jeweiliger Signalstärkeverlauf (TS1, TS2) des empfangenen Funksignals erfasst wird,

b) Erfassen von zusätzlichen Informationen (ZI) des ersten vorgegebenen Bereichs (B1), des jeweiligen ersten Funketiketts (RF1) und/oder des Ortungsgeräts (OG), wobei die zusätzlichen Informationen (ZI) Einfluss auf den Signalstärkeverlauf (TS1, TS2) haben,
c) Trainieren eines Maschinenlernmoduls (CNN) anhand der erfassten aktuellen Positionen (P), Signalstärkeverläufe (TS1, TS2) und der erfassten zusätzlichen Informationen (ZI), um anhand zumindest eines Signalstärkeverlaufs eine korrespondierende aktuelle Position zu reproduzieren, und
d) Einrichten des Ortungsgeräts (OG), um Signalstärkeverläufe (TS1, TS2) empfangener Funksignale von zweiten Funketiketten (RF2), die durch einen zweiten vorgegebenen Bereich (B2) befördert werden, in das trainierte Maschinenlernmodul (CNN) einzuspeisen und anhand von dessen resultierenden Ausgabesignalen (PP) eine jeweilige aktuelle Position eines jeweiligen zweiten Funketiketts (RF2) zu ermitteln.

## Beschreibung

Die vorliegende Erfindung betrifft ein Verfahren zum Konfigurieren eines Ortungsgeräts zum Orten von Funketiketten sowie eine Anordnung zum Konfigurieren eines Ortungsgeräts. Darüber hinaus betrifft die vorliegende Erfindung ein Verfahren zum Orten von Funketiketten sowie ein entsprechendes Ortungsgerät.

Zum Überwachen oder Erfassen von Gütern, Waren oder anderen Gegenständen, beispielsweise in Lagerräumen, können Funketiketten, z.B. sogenannte RFID-Transponder oder RFID-Tags (RFID: radio-frequency identification) eingesetzt werden. Derartige Funketiketten können mittels hochfrequenter Radiowellen von entsprechenden Lesegeräten ausgelesen werden. In vielen Fällen wird dabei das Funketikett durch vom Lesegerät erzeugte Radiowellen mit Energie versorgt und benötigt somit keine eigene Energieversorgung. Funketiketten erlauben eine einfache Identifikation von entsprechend etikettierten Objekten sowie eine Übertragung von Information zwischen Funketikett und Lesegerät.

Die RFID-Technologie ermöglicht es, die Annäherung von Funketiketten in Bezug auf eine Sende-/Empfangsstation, beispielsweise ein sogenanntes RFID-Gate, zu erkennen. Durch mehrere, passend im Raum verteilte Antennen des RFID-Gates lässt sich so die ungefähre Position der Funketiketten approximieren, um etwa die Durchfahrt von mit Funketiketten markierten Paketen durch die Einfahrt zu einem Lagerraum zu erkennen. Diese Positions- oder Durchfahrtbestimmung ist jedoch im Allgemeinen nicht ohne Weiteres aus den einzelnen Messwerten der Antennen ableitbar. Die Messwerte streuen beispielsweise stark, da vor allem statische und mobile metallische Gegenstände einen erheblichen Einfluss auf die Messergebnisse der Antennen haben.

In bisherigen Systemen wird beispielsweise maschinelles Lernen (ML) eingesetzt, um in einer Anordnung aus einem oder mehreren RFID-Gates und sich in dieser Anordnung bewegenden Funketiketten, die an sich bewegenden Objekten angebracht sind, Zusammenhänge zwischen Messwerten der Antennen und der Position der Funketiketten zu erkennen. Hierbei werden Modelle in einem Maschinenlernmodul unter Verwendung eines Trainingsaufbaus aus Antennen und Funketiketten trainiert. Diese Modelle können dann beispielweise in verschiedenen Lagersystemen verwendet werden, um dort ebenfalls die Positionen von Funketiketten zu bestimmen. Die Übertragbarkeit gelernter Modelle zwischen RFID-Aufbauten verschiedener Typen, Bauarten oder Ausführungskonfigurationen stellt hier jedoch eine Herausforderung dar. Wird ein Modell mit einer bestimmten Anordnung aus RFID-Gates bzw. Antennen und sonstigen Objekten und Funketiketten trainiert, tritt unter Umständen der Effekt auf, dass das Modell zu stark auf einzelne Situationen hin optimiert ist (sogenanntes "Overfitting"), was eine breite Verwendung in verschiedenen Anlagen mit unterschiedlichen Aufbauten erschweren kann.

Bisher wird daher üblicherweise für jede Anlage basierend auf dort aufgenommenen Daten ein neues Modell trainiert. Die Modelltopologie (also dessen Struktur) kann zwar häufig übernommen werden, die gelernte Parametrierung, die für jede Anlage spezifisch ist und sich auf die konkrete Anordnung der Anlage aus RFID-Gates, sonstigen Objekten, Funketiketten etc. bezieht, muss aber komplett neu gelernt werden. Des Weiteren müssen daher Trainingsdaten neu erfasst werden und das Maschinenlernmodul basierend auf diesen Trainingsdaten neue Modelle antrainieren oder zumindest umfangreich anpassen.

Vor diesem Hintergrund besteht eine Aufgabe der vorliegenden Erfindung darin, eine Möglichkeit bereitzustellen, trainierte Modelle zur Funketikettenerfassung einfach auf verschiedene Anlagen zu übertragen.

Gelöst wird diese Aufgabe durch ein Verfahren mit den Merkmalen der Patentansprüche 1 bzw. 13, durch eine Anordnung mit den Merkmalen des Patentanspruchs 14 sowie durch ein Ortungsgerät mit den Merkmalen des Patentanspruchs 15.

Gemäß dem Verfahren zum Konfigurieren eines Ortungsgeräts zum Orten von Funketiketten werden ein oder mehrere erste Funketiketten unter variierten Beförderungsbedingungen mehrmalig durch einen ersten vorgegebenen Bereich befördert, wobei jeweils eine aktuelle Position eines jeweiligen ersten Funketiketts mittels eines Lokalisierungssensors erfasst wird, und ein Funksignal des jeweiligen ersten Funketiketts durch das Ortungsgerät empfangen und ein jeweiliger Signalstärkeverlauf des empfangenen Funksignals erfasst wird. Es werden also für verschiedene Positionen bestimmte Signalstärken, auch RSSI-Werte (Received Signal Strength Indicator) genannt, erfasst.

Des Weiteren werden zusätzliche Informationen des ersten vorgegebenen Bereichs, des jeweiligen ersten Funketiketts und/oder des Ortungsgeräts erfasst. Insbesondere werden hierbei, zusätzlich zu den Positionen der Funketiketten und den Signalstärkeverläufen, Informationen der Gesamtstruktur des ersten vorgegebenen Bereichs erfasst, die Einfluss auf den Signalstärkeverlauf haben.

Ein Maschinenlernmodul wird anschließend anhand der erfassten aktuellen Positionen, der Signalstärkeverläufe und der erfassten zusätzlichen Informationen trainiert, um anhand zumindest eines Signalstärkeverlaufs eine korrespondierende aktuelle Position zu reproduzieren.

Unter einem Training wird hier allgemein eine Optimierung einer Abbildung von Eingabesignalen eines Maschinenlernmoduls, hier CNN, auf dessen Ausgabesignale verstanden. Diese Abbildung wird nach einem oder mehreren vorgegebenen Kriterien während einer Trainingsphase optimiert. Als Kriterium kann insbesondere bei Prognosemodellen ein Prognosefehler herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Trainieren lassen sich so insbesondere künstliche neuronale Netze, rekurrente neuronale Netze, faltende neuronale Netze, LSTM-Netze, Deep-Learning-Architekturen, Support-Vektor-Maschinen, bayessche neuronale Netze, Autoencoder, Gaußprozesse, datengetriebene Regressionsmodelle, K-nächste-Nachbarn-Klassifikatoren, physikalische Modelle oder Entscheidungsbäume.

Im Gegensatz zu bisherigen Systemen werden bei dem hier vorgeschlagenen Verfahren nicht nur die Positionen der Funketiketten und korrespondiere Signalstärkeverläufe verwendet, um das Maschinenlernmodul zu trainieren. Stattdessen werden weitere zusätzliche Informationen verwendet, die das Maschinenlernmodul in die Lage versetzen, die erfassten Positionen und Signalstärkeverläufe zu verallgemeinern. Da die Signalstärkeverläufe beeinflussende Faktoren bekannt sind, kann das Maschinenlernmodul die Modelle, die anhand der erfassten Signalstärkeverläufe, Positionen der Funketiketten und zusätzlichen Informationen des ersten vorgegebenen Bereichs, d.h. mit einer ersten Struktur in einer Trainingsanlage, trainiert werden, auf andere Anlagen übertragen, die sich in ihrer Struktur von der ersten Struktur unterscheiden. Durch die Erweiterung des Modells um zusätzliche Trainingsinformationen kann das Maschinenlernmodul ein umfassenderes Training seines Modells durchführen (da mehr Daten vorhanden sind) und ist dadurch flexibler an andere Strukturen anpassbar.

Anschließend kann das Ortungsgerät Signalstärkeverläufe empfangener Funksignale von zweiten Funketiketten, die durch einen zweiten vorgegebenen Bereich (d.h. einen Bereich, der in einer Zielanlage des endgültigen Einsatzortes vorhanden ist) befördert werden, in das trainierte Maschinenlernmodul einspeisen und anhand von dessen resultierenden Ausgabesignalen eine jeweilige aktuelle Position eines jeweiligen zweiten Funketiketts ermitteln.

Mit ersten Funketiketten und ersten vorgegebenen Bereich werden hier Funketiketten und ein Bereich bezeichnet, die während einer Trainingsphase des Maschinenlernmoduls verwendet werden, wohingegen mit zweiten Funketiketten und zweiten vorgegebenen Bereich Funketiketten und ein Bereich bezeichnet werden, die während einer Anwendungsphase, d.h. im Einsatz verwendet werden. Die jeweiligen Funketiketten und Bereiche können identisch sein. Die Struktur des ersten Bereichs in der Trainingsphase wird auch als Trainingsstruktur oder Trainingsanlage bezeichnet, die Struktur des zweiten Bereichs in der Anwendungsphase wird auch als Zielstruktur, Zielanlage, Anwendungsstruktur oder Anwendungsanlage bezeichnet.

Wie auch in bisherigen Systemen können Funketiketten gemäß dem vorgeschlagenen Verfahren anhand der von ihnen bestimmungsgemäß abgegebenen Funksignale lokalisiert werden. Da das Maschinenlernmodul zusätzlich darauf trainiert werden kann, die empfangenen Funksignale in Abhängigkeit von zusätzlichen Informationen zu bewerten, kann das Maschinenlernmodul im Einsatz für die Position von Funketiketten relevante Funksignalmuster von weniger relevanten Funksignalmustern sowie von Störfaktoren beeinflusste Funksignalmuster unterscheiden, wodurch eine stabilere Ortung der Funketiketten möglich wird. Darüber hinaus kann das trainierte Maschinenlernmodul anschließend auf einer Vielzahl von Ortungsgeräten installiert werden, ohne dass ein weiteres Training des Maschinenlernmoduls erforderlich ist.

Vorteilhafte Ausführungsformen und Weiterbildungen der Erfindung sind in den abhängigen Ansprüchen angegeben.

Ein an einem Objekt angebrachtes Funketikett kann mit dem Objekt durch den Bereich bewegt werden. Auf diese Weise kann das Training unter besonders realitätsnahen Bedingungen durchgeführt werden. Insbesondere kann eine mögliche Beeinflussung eines Signalstärkeverlaufs durch ein jeweils etikettiertes Objekt beim Training berücksichtigt werden.

Zum Variieren der Beförderungsbedingungen kann eine Bewegungstrajektorie, eine Bewegungsrichtung, eine Bewegungsgeschwindigkeit, ein Bewegungsmuster, eine Orientierung, ein Typ und/oder eine Anzahl des zumindest einen ersten Funketiketts, eine Bewegungstrajektorie, eine Bewegungsrichtung, eine Bewegungsgeschwindigkeit, ein Bewegungsmuster, eine Orientierung, ein Typ und/oder eine Anzahl von zumindest einem mit einem ersten Funketikett versehenen Objekt, eine Position oder Orientierung eines funksignalbeeinflussenden Gegenstandes, eine Ausrichtung einer Antenne des Ortungsgeräts, eine Sendeleistung, Empfindlichkeit oder Einstellung des Ortungsgeräts, und/oder eine Hardwarekonfiguration des Ortungsgeräts variiert werden. Die Hardwarekonfiguration kann beispielweise ein verwendetes Antennenmodell, ein verwendetes Lesegerätmodell oder eine Kabellänge zwischen einer Antenne und einem Lesegerät betreffen. Die Beförderungsbedingungen können so variiert werden, dass sie im Betrieb des konfigurierten Ortungsgeräts mögliche und/oder zulässige Beförderungsszenarien oder Nutzungsarten möglichst repräsentativ oder vollständig abdecken.

Bei dem hier beschriebenen Verfahren werden nicht nur die Beförderungsbedingungen variiert und entsprechende Funksignalverläufe erfasst. Vielmehr werden auch, bei einer Veränderung der Beförderungsbedingungen, entsprechende zusätzliche Informationen erfasst, die sich aufgrund der geänderten Beförderungsbedingungen ebenfalls geändert haben können. Auf diese Weise stehen dem Maschinenlernmodul auch bei einer Variation der Beförderungsbedingungen entsprechende Trainingsdaten zur Verfügung, um basierend auf einer Kombination von Funksignalverläufen, Positionen der Funketiketten und zusätzlichen Informationen, ein möglichst generalisiertes Modell zu erstellen.

Bei der jeweiligen Beförderung eines oder mehrerer erster Funketiketten durch den ersten vorgegebenen Bereich kann jeweils eine Bewegungstrajektorie, eine Bewegungsrichtung, eine Bewegungsgeschwindigkeit, ein Bewegungsmuster, eine Orientierung, ein Typ und/oder eine Anzahl des zumindest einen ersten Funketiketts oder eine Bewegungstrajektorie, eine Bewegungsrichtung, eine Bewegungsgeschwindigkeit, ein Bewegungsmuster, eine Orientierung, ein Typ und/oder eine Anzahl von zumindest einem mit einem ersten Funketikett versehenen Objekt als Messergebnis erfasst werden. Das Maschinenlernmodul kann entsprechend darauf trainiert werden, anhand zumindest eines Signalstärkeverlaufs ein korrespondierendes Messergebnis zu reproduzieren. Auf diese Weise kann das Ortungsgerät dazu eingerichtet werden, neben der aktuellen Position auch andere Bewegungseigenschaften oder Beförderungsbedingungen von zweiten Funketiketten anhand von empfangenen Funksignalen zu ermitteln. Wie bereits oben beschrieben, kann das Maschinenlernmodul des Weiteren darauf trainiert werden, weitere Informationen, die die Signalstärkeverläufe beeinflussen, zu berücksichtigen.

Als Lokalisierungssensor kann ein optischer Sensor, eine Kamera, ein funkwellenbasierter Sensor, ein Annäherungssensor und/oder ein Laserscanner verwendet werden. Insbesondere kann der Lokalisierungssensor auf Basis eines Lidar-, Radar-, RTLS- (Real-Time Locating System), Bluetooth-, W-LAN- oder 5G-Sytems realisiert werden. Vorzugsweise können mehrere derartige Lokalisierungssensoren, insbesondere mehrere Kameras eingesetzt werden.

Vorteilhafterweise kann das Maschinenlernmodul ein rekurrentes neuronales Netz, ein LSTM-Netz (LSTM: Long Short-Term Memory), ein faltendes neuronales Netz und/oder ein zeitlich faltendes neuronales Netz umfassen. Mittels derartiger neuronaler Netze können insbesondere Zeitreihendaten sehr effizient verarbeitet werden.

Gemäß einer Ausführungsform sind die Informationen des ersten vorgegebenen Bereichs Umgebungsinformationen, die Störfaktoren der Funksignale darstellen. Zu solchen Umgebungsinformationen können Gegenstände oder Wände zählen, die sich in dem ersten vorgegebenen Bereich befinden. Die Umgebungsinformationen können beispielsweise anhand von Bildinformationen und/oder Geometrieinformationen, z.B. Abstände zu und Position von Wänden und/oder Störquellen, ermittelt werden. Bildinformationen können Fotos oder Pläne der jeweiligen Anlage oder Aufnahmen von Kameras, welche den ersten vorgegebenen Bereich erfassen, sein. Solche Informationen erlauben es unter anderem Geometrieinformationen, mobile Störquellen und Umbauten zu berücksichtigen. Letzteres ist insbesondere möglich, wenn es sich bei den Bildinformationen um aktuelle Aufnahmen handelt, die ein Erfassen von Veränderungen des ersten vorgegebenen Bereichs ermöglichen.

Je nach Art der Bildinformationen und/oder Geometrieinformationen kann das Erfassen der Informationen des ersten vorgegebenen Bereichs eine Verarbeitung der Bildinformationen und/oder der Geometrieinformationen umfassen. Die Verarbeitung kann dazu dienen, die erfassten Informationen in ein Format umzuwandeln, das durch das Maschinenlernmodul verarbeitbar ist. Beispielsweise kann die Verarbeitung eine Mustererkennung von Fotos oder Videoaufnahmen beinhalten, um Störquellen, Wände, etc. in den Aufnahmen zu detektieren. Das Ergebnis einer solchen Mustererkennung kann dann wiederum dem Maschinenlernmodul zugeführt werden.

Gemäß einer weiteren Ausführungsform sind die Informationen des jeweiligen ersten Funketiketts zusätzliche Positionsinformationen, die von einem oder mehreren zusätzlichen Positionssensoren erfasst werden. Die zusätzlichen Positionsinformationen können beispielsweise eine Geschwindigkeit und/oder Größe des jeweiligen ersten Funketiketts bzw. des Objekts, an dem das Funketikett befestigt ist, angeben. Zusätzlich zu der reinen Position eines Funketiketts können somit noch weitere auf die Position bezogene Informationen in das Maschinenlernmodell eingespeist werden, welches dadurch ein umfassenderes Modell der Anlage erstellen kann.

Bei den zusätzlichen Positionssensoren kann es sich beispielsweise um Lichtschranken handeln, welche den Eintritt oder Austritt eines Objekts mit einem ersten Funketikett in oder aus dem ersten vorgegebenen Bereich, oder in/aus einem Bereich innerhalb des ersten vorgegebenen Bereichs, und deren ungefähre Länge oder Geschwindigkeit detektieren können. Auch RTLS-Tags oder andere Funketiketten, welche das gesamte Objekt, z.B. einen Gabelstapler oder Paketwagen eindeutig identifizieren und dessen Position tracken können, können als Positionssensoren verwendet werden. Auch können weitere zusätzliche Kameras oder ähnliches eingesetzt werden.

Gemäß einer weiteren Ausführungsform sind die Informationen des Ortungsgeräts Konfigurationsparameter des Ortungsgeräts. Beispielsweise kann es sich um Parameter der Antennenansteuerung und -auslese, wie z.B. die eingestellte Sendeleistung pro Antenne, Schwellwerte für die RSSI-basierte Funketikett-Erkennung, Winkelorientierung der einzelnen Antennen, etc. handeln.

Alle oben beschriebenen Informationen können durch das Maschinenlernmodul verwendet werden, um die erfassten Funksignale im Training besser verstehen und daher verallgemeinern zu können. Das Maschinenlernmodul wird daher in die Lage versetzt, Störfaktoren bei der Bewertung der Funksignale berücksichtigen zu können.

Wie oben beschrieben ist, können die zusätzlichen Informationen dem Maschinenlernmodul während der Trainingsphase zur Verfügung gestellt werden.

Gemäß einer weiteren Ausführungsform werden solche zusätzlichen Informationen auch während des Betriebs des Ortungsgeräts nach der Trainingsphase verwendet. Demgemäß wird das Ortungsgerät dazu eingerichtet, die Signalstärkeverläufe der empfangenen Funksignale der zweiten Funketiketten und zusätzliche Informationen des zweiten vorgegebenen Bereichs, des jeweiligen zweiten Funketiketts und/oder des Ortungsgeräts in das trainierte Maschinenlernmodul einzuspeisen und anhand von dessen resultierenden Ausgabesignalen eine jeweilige aktuelle Position eines jeweiligen zweiten Funketiketts zu ermitteln.

Die hier verwendeten zusätzlichen Informationen des zweiten vorgegebenen Bereichs, des jeweiligen zweiten Funketiketts und/oder des Ortungsgeräts können die gleiche oder eine ähnliche Art von Informationen sein, wie sie oben in Bezug auf den ersten vorgegebenen Bereich, die ersten Funketiketten und/oder das Ortungsgerät beschrieben sind.

Da in dieser Ausführungsform die zusätzlichen Informationen nicht nur in der Trainingsphase, sondern auch im tatsächlichen Einsatz zur Verfügung stehen, wird das Maschinenlernmodul in die Lage versetzt, eine genauere Bestimmung der Position der zweiten Funketiketten zu liefern. Dies ist insbesondere auch dann der Fall, wenn es eine Abweichung im strukturellen Aufbau der jeweiligen Anlage gibt, da dem Maschinenlernmodul sowohl ausreichende Trainingsdaten als auch Daten während des Einsatzes zur Verfügung stehen, die eine gute Übertragbarkeit des antrainierten Modells auf weitere, eventuell geänderte, Anlagen und eine Vergleichbarkeit der Signale im Training und im Einsatz ermöglichen.

Gemäß einer weiteren Ausführungsform weist der Schritt c) des Trainierens des Maschinenlernmoduls das Erzeugen eines Kernmodells anhand der erfassten aktuellen Positionen und der Signalstärkeverläufe der ersten Funketiketten, das Erzeugen eines Vorverarbeitungsmodels anhand der erfassten aktuellen Positionen, der Signalstärkeverläufe der ersten Funketiketten und der erfassten Informationen und das Erzeugen eines Transformationsmodells durch Abbilden des Vorverarbeitungsmodells auf das Kernmodell auf. Das trainierte Maschinenlernmodul kann anschließend das Transformationsmodell zum Ermitteln der Position eines zweiten Funketiketts verwenden.

Gemäß dieser Ausführungsform wird ein mehrstufiger (hierarchischer) Modellierungsansatz des Maschinenlernmoduls verwendet. Das Kernmodell wird einmal statisch für einen normierten Aufbau (in einer Anlage des ersten vorgegebenen Bereichs) trainiert, wie oben beschrieben ist (d.h. unter Verwendung der Funksignalverläufe und Positionen der ersten Funketiketten und eventuell von zusätzlichen Informationen). Dieser normierte Aufbau des ersten vorgegebenen Bereichs weist wenig Störquellen auf, um eine Erfassung der Signalverläufe möglichst ohne Einfluss durch irgendwelche Gegenstände oder sonstige Störfaktoren zu erlauben. Anschließend wird ein zweites (Vorverarbeitungs-) Modell mittels algorithmischen Transformationsschritten basierend auf anlagenspezifischen Beschreibungsinformationen erzeugt. Dies kann, wie oben beschrieben, unter Verwendung einer Anlage mit Störfaktoren, die als zusätzliche Informationen in das Modell einfließen, erfolgen. Das Maschinenlernmodul kann dann, basierend auf dem Vorverarbeitungsmodell (welches sich auf eine spezifische Anlage beziehen kann, wie sie auch später im Einsatz vorliegt) und dem Kernmodell, ein Transformationsmodell erzeugen. Das Transformationsmodell dient dazu, die im Einsatz gemessenen Signalverlaufswerte so abzubilden, als wären sie im normierten Aufbau gemessen worden. Das Maschinenlernmodul, welches durch das Ortungsgerät im Einsatz verwendet wird, kann somit tatsächlich gemessene Werte der Funksignalverläufe der zweiten Funketiketten mittels dieses Transformationsmodells auf das Kernmodell übertragen und dadurch die Positionen der jeweiligen zweiten Funketiketten bestimmen.

Dieser hierarchische Aufbau aus Kernmodell, Vorverarbeitungsmodell und resultierenden Transformationsmodell hat den Vorteil, dass die zusätzlichen Informationen nicht kontinuierlich anliegen müssen, sondern nur einmalig oder wenn sich der Aufbau grundlegend verändert. Sobald das Transformationsmodell vorliegt, sind nur noch die Funksignalverläufe der tatsächlichen Anlage im Einsatz notwendig.

Die oben beschriebene Erzeugung des Transformationsmodells kann auch innerhalb des Maschinenlernmoduls selbst optimiert werden. Die Trainingsdaten sind, wie oben beschrieben, die Funksignalverläufe und Positionen in einer spezifischen Anlage, d.h. der ersten Funketiketten, sowie entsprechende zusätzliche Informationen. Die Ausgangsdaten des Maschinenlernmoduls sind die entsprechenden Funksignalverläufe einer normierten Anlage. Das Ergebnis ist ein Transformationsmodell, welches dann im Einsatz allein aufgrund der erfassten Funksignalverläufe der zweiten Funketiketten und der Zusatzinformationen, die ebenfalls im Einsatz, nach dem Training, erfasst werden, normierte Funksignalverläufe produzieren kann, solange die Zielanlage, d.h. die Anlage, wie sie in dem zweiten vorgegebenen Bereich nach dem Training vorliegt, ähnlich genug zu der Anlage des ersten vorgegebenen Bereichs ist, die im Training verwendet wurde.

Gemäß einer weiteren Ausführungsform wird das trainierte Maschinenlernmodul an einem Einsatzort des Ortungsgeräts anhand von am Einsatzort erfassten Positionsdaten und erfassten Informationen des zweiten vorgegebenen Bereichs, des jeweiligen zweiten Funketiketts und/oder des Ortungsgeräts nachtrainiert. Als Positionsdaten können dabei insbesondere Lokalisierungsdaten aus einem Objektüberwachungssystem eines Betreibers oder manuell eingegebene Lokalisierungsdaten, Bestätigungsdaten und/oder Korrekturdaten verwendet werden. Ein solches Nachtraining kann insbesondere eingesetzt werden, wenn sich die Anlage, die sich in dem zweiten vorgegebenen Bereich befindet, stark von der Trainingsanlage, d.h. der Anlage in dem ersten vorgegebenen Bereich, unterscheidet. Unterschiede zwischen den Anlagen können zu einer falschen Bewertung der Signale durch das Maschinenlernmodul führen, weshalb hier ein Nachtraining hilfreich sein kann. Bei einem solchen Nachtraining müssen die zusätzlichen Informationen nicht dauerhaft während des tatsächlichen Einsatzes vorhanden sein, sondern nur während einer Nachtrainingsphase. Dazu können auf der Zielanlage Funksignalverläufe mit korrespondierenden Positionen der zweiten Funketiketten sowie zusätzliche Informationen des zweiten vorgegebenen Bereichs, der zweiten Funketiketten und/oder des Ortungsgeräts erfasst werden. Diese Daten sowie die Daten der normierten Anlage, d.h. Daten der Anlage des ersten vorgegebenen Bereichs können dann verwendet werden, um ein Transformationsmodell anzulernen. Das Transformationsmodell dient dazu, die im tatsächlichen Einsatz erfassten Daten (Funksignalverläufe der zweiten Funketiketten) mit Hilfe des Transformationsmodells auf das normierte Kernmodell übertragen zu können, um somit die Positionen der zweiten Funketiketten basierend ausschließlich auf den erfassten Funksignalverläufen zu bestimmen.

Gemäß einer weiteren Ausführungsform wird eine Unsicherheit der Bestimmung der aktuellen Position eines zweiten Funketiketts ermittelt. Wenn diese Unsicherheit größer als ein vorgegebener Schwellwert ist, kann das trainierte Maschinenlernmodul an dem Einsatzort des Ortungsgeräts nachtrainiert werden. Die Unsicherheit der Bestimmung kann beispielsweise ermittelt werden, wenn ein probabilistisches Modell verwendet wird, welches in der Lage ist, unter anderem die Modellunsicherheit auszudrücken. Das (vortrainierte) Modell kann dann gezielt weitere Trainingsdaten sammeln, um das Modell (oder eine wie oben beschriebene Kaskade von Kernmodell, Vorverarbeitungsmodell und Transformationsmodell) nachzutrainieren. Diese Ausführungsform hat den Vorteil, dass ein vortrainiertes Modell verwendet wird, welches dann, mit möglichst wenigen Trainingsdaten, an die Zielanlage angepasst werden kann. Auch sehr unterschiedliche Trainings- und Zielanlagen können somit durch das hier verwendete Maschinenlernmodul abgedeckt werden.

Vorteilhafterweise kann das trainierte Maschinenlernmodul bestimmen, welche Trainingsdaten erforderlich sind. Dies kann beispielsweise basierend auf den bereits vorhandenen Daten, der Art einer Abweichung von Signalverläufen der ersten und zweiten Funketiketten oder sonstigen Informationen erfolgen, die durch das Maschinenlernmodul bestimmt werden. Auf diese Weise können gezielt bestimmte Trainingsdaten angefordert und in das Maschinenlernmodul eingespeist werden.

Gemäß einem weiteren Aspekt wird ein Verfahren zum Orten von Funketiketten vorgeschlagen, wobei das Verfahren das Konfigurieren eines Ortungsgeräts, wie oben beschrieben, und das Ermitteln einer aktuellen Position eines zweiten Funketiketts mittels des konfigurierten Ortungsgeräts aufweist.

Des Weiteren wird eine Anordnung zum Konfigurieren eines Ortungsgeräts zum Orten von Funketiketten, wobei die Anordnung zum Ausführen der Verfahrensschritte des wie oben beschriebenen Verfahrens ausgebildet ist.

Darüber hinaus wird ein Ortungsgerät zum Orten von Funketiketten vorgeschlagen, wobei das Ortungsgerät dazu ausgebildet ist, das oben beschriebene Verfahren auszuführen.

Die oben beschriebenen Verfahren, die Anordnung sowie das Ortungsgerät können beispielsweise mittels eines oder mehrerer Prozessoren, Computer, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus können die Verfahren zumindest teilweise in einer Cloud und/oder in einer Edge-Computing-Umgebung ausgeführt werden.

Bei bisherigen Systemen muss für jede Anlage unter Umständen von Grund auf ein neues Modell mit einem kompletten, anlagenspezifischen Datensatz trainiert werden. Die oben beschriebenen Verfahren, die beschriebene Anordnung und das beschriebene Ortungsgerät ermöglichen einen Transfer eines einmal trainierten Modells auf andere Anlagen komplett ohne Nachtraining oder zumindest nur einem reduzierten Nachtraining mit einer reduzierten Anzahl von Trainingsdaten und reduzierter Trainingszeit.

Die für die vorgeschlagenen Verfahren beschriebenen Ausführungsformen und Merkmale gelten für die vorgeschlagene Anordnung sowie das Ortungsgerät entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei werden Fachleute auch Einzelaspekte als Verbesserungen oder Ergänzungen zu der jeweiligen Grundform der Erfindung hinzufügen. Es wird darauf hingewiesen, dass, unabhängig vom grammatikalischen Geschlecht eines bestimmten Begriffes, Personen mit männlicher, weiblicher oder anderer Geschlechteridentität mit umfasst sind.

Ein Ausführungsbeispiel der Erfindung wird nachfolgend anhand der Figuren näher erläutert. Dabei veranschaulichen jeweils in schematischer Darstellung:
- Figur 1: eine Anordnung zum Konfigurieren eines Ortungsgeräts, und
- Figur 2: einen bestimmungsgemäßen Betrieb des konfigurierten Ortungsgeräts.

Insofern in den Figuren gleiche oder korrespondierende Bezugszeichen verwendet werden, bezeichnen diese Bezugszeichen gleiche oder korrespondierende Entitäten, die insbesondere wie im Zusammenhang mit der betreffenden Figur beschrieben, implementiert oder ausgestaltet sein können.

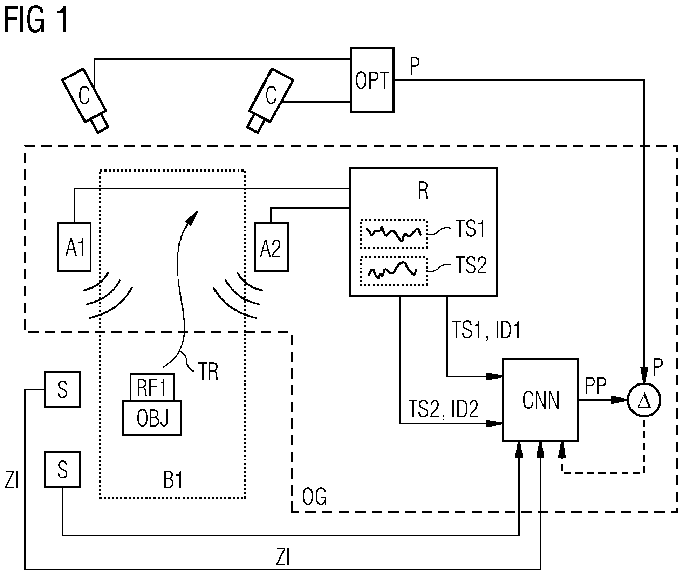

Fig. 1 veranschaulicht in schematischer Darstellung eine (Trainings-)Anordnung zum Konfigurieren eines Ortungsgeräts OG. Das Ortungsgerät OG kann hierbei insbesondere ein RFID-Gate oder ein Teil desselben sein. Das Ortungsgerät OG dient zum Überwachen eines vorgegebenen ersten Bereichs B1, durch den sich Objekte OBJ, z.B. Pakete, Verpackungen, Produkte, Produktkomponenten, Roboterfahrzeuge etc. bewegen. Der Bereich B1 kann beispielsweise ein Transportbereich oder ein Förderband einer Lagerhalle, eines Logistikzentrums, eines Warenlagers oder einer Produktionsanlage sein. Zur Identifikation und/oder Ortung der Objekte OBJ sind diese jeweils mit einem Funketikett RF1, z.B. mit einem RFID-Tag versehen.

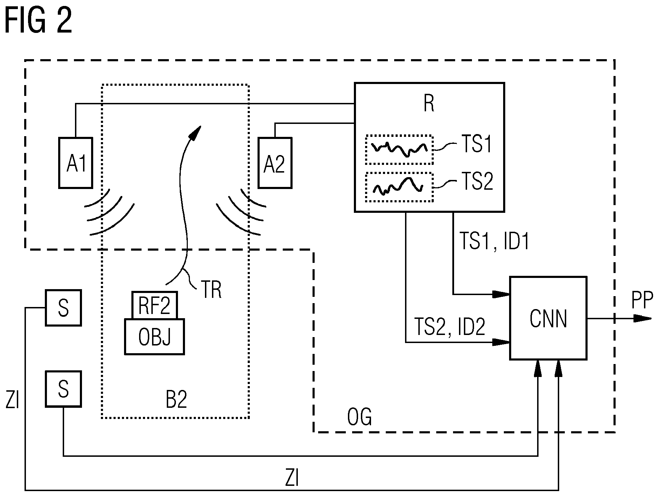

Das Ortungsgerät OG wird derart konfiguriert, dass es in einer Zielanordnung, wie sie in Fig. 2 dargestellt ist, durch einen zweiten vorgegebenen Bereich B2 bewegte Funketiketten RF2 anhand der von ihnen empfangenen Funksignale möglichst genau und/oder robust lokalisieren kann. Der prinzipielle Aufbau der Trainingsanordnung von Fig. 1 und der Zielanordnung von Fig. 2 ist ähnlich und die in beiden Anordnungen verwendeten Elemente werden daher nur in Bezug auf Fig. 1 beschrieben.

Zu diesem Zweck verfügt das Ortungsgerät OG über ein Lesegerät R für Funketiketten, mehrere an das Lesegerät R gekoppelte Antennen A1 und A2, sowie über ein Maschinenlernmodul CNN. Das Maschinenlernmodul CNN kann ein faltendes, insbesondere ein zeitlich faltendes neuronales Netz. Ein solches faltendes neuronales Netz wird häufig auch als "convolutional neural network" bezeichnet. Alternativ oder zusätzlich kann das Maschinenlernmodul CNN ein rekurrentes neuronales Netz, ein LSTM-Netz oder ein anderes neuronales Netz umfassen.

Im Folgenden wird das Maschinenlernmodul CNN darauf trainiert, aktuelle Positionen von Funketiketten RF1, RF2 zu prognostizieren.

Im vorliegenden Ausführungsbeispiel werden zum Training des Maschinenlernmoduls CNN mit ersten Funketiketten RF1 versehene Objekte OBJ mehrmals, vorzugsweise viele Male, unter variierten Beförderungsbedingungen, insbesondere auf unterschiedlichen Bewegungstrajektorien TR durch den Bereich B1 bewegt. Wie bereits oben erläutert, werden als erste Funketiketten RF1 Funketiketten bezeichnet, die zum Training verwendet werden, während Funketiketten, die im bestimmungsgemäßen Betrieb zu orten sind, als zweite Funketiketten RF2 bezeichnet werden. Diese Unterscheidung dient lediglich zur Unterscheidung der Trainingsphase von einer Anwendungsphase und impliziert insbesondere keine strukturellen Unterschiede zwischen ersten und zweiten Funketiketten. Tatsächlich werden zum Training vorzugsweise (erste) Funketiketten RF1 verwendet, die gleichartig oder ähnlich zu den im bestimmungsgemäßen Betrieb zu ortenden (zweiten) Funketiketten RF2 sind.

Die Beförderungsbedingungen werden während der Trainingsphase so variiert, dass sie die in einen bestimmungsgemäßen Betrieb des konfigurierten Ortungsgeräts OG möglichen und/oder zulässigen Beförderungsszenarien, Nutzungsarten oder Einflussfaktoren möglichst vollständig und/oder repräsentativ abdecken. Insbesondere werden die Bewegungstrajektorien TR vorzugsweise über den gesamten Bereich B1 und/oder hinsichtlich einer Bewegungsrichtung, einer Bewegungsgeschwindigkeit oder eines Bewegungsmusters variiert. Weiterhin können eine Orientierung, ein Typ und/oder eine Anzahl der durch den Bereich B bewegten Objekte OBJ variiert werden. Darüber hinaus können eine Position oder Orientierung eines funksignalbeeinflussenden Gegenstandes im Bereich B1 oder in dessen Umgebung, eine Ausrichtung der Antennen A1, A2 und/oder eine Sendeleistung, Empfindlichkeit, Einstellung oder Hardwarekonfiguration des Ortungsgeräts OG variiert werden.

Zur Lokalisierung der Objekte OBJ und damit der ersten Funketiketten RF1 sind mehrere Kameras C auf den Bereich B1 gerichtet, die fortlaufend Bilder des Bereichs B1 aus unterschiedlichen Richtungen, beispielsweise in Draufsicht und Profilsicht aufnehmen. Die Kameras C sind an eine optische Auswerteeinrichtung OPT gekoppelt, zu der die aufgenommenen Bilder fortlaufend übermittelt werden. Die optische Auswerteeinrichtung OPT dient zum fortlaufenden Detektieren und Lokalisieren der Objekte OBJ. Alternativ oder zusätzlich zu den Kameras C können zur Lokalisierung der Objekte OBJ andere Lokalisierungssensoren vorgesehen sein, wie z.B. funkwellenbasierte Sensoren, Annäherungssensoren oder Laserscanner.

Im vorliegenden Ausführungsbeispiel wird durch die optische Auswerteeinrichtung OPT anhand der übermittelten Bilder fortlaufend eine jeweilige aktuelle Position P eines jeweiligen Objekts OBJ und damit eines jeweiligen Funketiketts RF1 im Zeitverlauf ermittelt. Als aktuelle Position P kann dabei insbesondere ein Positionsvektor, ein Bewegungsvektor und/oder eine Angabe, in welcher Zone des Bereichs B1 sich ein jeweiliges Objekt OBJ aktuell befindet, ermittelt werden. Zum letztgenannten Zweck kann der Bereich B1 beispielsweise in Zonen links und rechts von einer Mittelachse eines RFID-Gates und/oder in Zonen innerhalb und außerhalb einer Funkreichweite des RFID-Gates eingeteilt werden.

Sofern als aktuelle Position P eine diskrete Zonenangabe ermittelt wird, kann das Maschinenlernmodul CNN durch bekannte einschlägige Verfahren darauf trainiert werden, eine diskrete Klassifikation vorzunehmen. Sofern als aktuelle Position P eine quasikontinuierliche Positions- oder Bewegungsgröße ermittelt wird, kann das Maschinenlernmodul CNN durch ebenfalls einschlägige Verfahren darauf trainiert werden, eine quasikontinuierliche Prognose auszugeben. Ein Training des Maschinenlernmoduls CNN wird untern näher erläutert.

Vorzugsweise können durch die optische Auswerteeinrichtung OPT auch weitere Daten über die Bewegungen der Objekte OBJ in zeitaufgelöster Weise als Messergebnisse ermittelt werden, wie z.B. eine jeweilige Orientierung, eine jeweilige Bewegungsrichtung, eine jeweilige Bewegungsgeschwindigkeit, ein jeweiliges Bewegungsmuster, ein jeweiliger Typ und/oder eine Anzahl der Objekte OBJ. Die Messergebnisse können dann dazu verwendet werden, das Maschinenlernmodul CNN darauf zu trainieren, neben einer aktuellen Position auch die Messergebnisse zu reproduzieren.

Zur Auswertung der Bilder durch die optische Auswerteeinrichtung OPT stehen eine Vielzahl bekannter optischer Muster- oder Objekterkennungsverfahren zur Verfügung.

Weiterhin werden durch das Lesegerät R über die Antennen A1 und A2 Funkwellen in den Bereich B1 ausgestrahlt, die von einem jeweils darin befindlichen ersten Funketikett RF1 empfangen werden und dieses temporär mit Energie versorgen. Das jeweilige erste Funketikett RF1 strahlt infolgedessen während seiner Bewegung durch den Bereich B1 ein Funksignal ab, das von den Antennen A1 und A2 empfangen und an das Lesegerät R weitergeleitet wird.

Während das jeweilige erste Funketikett RF1 durch den Bereich B1 bewegt wird, erfasst das Lesegerät R einen jeweiligen zeitlichen Verlauf TS1 einer Signalstärke des von der Antenne A1 empfangenen Funksignals sowie einen jeweiligen zeitlichen Verlauf TS2 einer Signalstärke des von der Antenne A2 empfangenen Funksignals. Die antennenspezifischen Signalstärkeverläufe TS1 und TS1 werden jeweils in Form einer zeitlichen Abfolge, d.h. in Form einer Zeitreihe von sogenannten RSSI-Werten erfasst.

Zum Training des Maschinenlernmoduls CNN werden sowohl der jeweilige Signalstärkeverlauf TS1 in Zuordnung zu einer die Antenne A1 identifizierenden Antennenkennung ID1 als auch der jeweilige Signalstärkeverlauf TS2 in Zuordnung zu einer die Antenne A2 identifizierenden Antennenkennung ID2 vom Lesegerät R in das Maschinenlernmodul CNN als zeitlich aufgelöste Eingabesignale eingespeist.

Durch das Training wird angestrebt, dass das Maschinenlernmodul CNN anhand von eingespeisten, antennenspezifischen Signalstärkeverläufen, hier TS1 und TS2, eine tatsächlich erfasste aktuelle Position, hier P, möglichst gut reproduziert. D.h. dass ein Ausgabesignal PP des Maschinenlernmoduls CNN zumindest im Mittel möglichst gut mit der tatsächlich ermittelten aktuellen Position P übereinstimmt. Ein Delta zwischen dem Ausgabesignal PP und der tatsächlichen Position P kann in das Maschinenlernmodul CNN als Rückkopplungssignal eingegeben werden, um die Vorhersage zu verbessern.

Um die Übertragbarkeit der durch das Maschinenlernmodul CNN antrainierten Modelle auf andere Anlagen, wie z.B. eine Zielanlage, wie sie in Fig. 2 gezeigt ist, zu verbessern, werden zusätzlich zu den Positionen P und den Signalstärkeverläufen TS1, TS2 weitere zusätzliche Informationen ZI erfasst. Diese Informationen ZI können über verschiedene Sensoren S erfasst werden. In Fig. 1 sind beispielhaft zwei Sensoren S dargestellt, es können jedoch mehr oder weniger Sensoren vorhanden sein. Des Weiteren können die zusätzlichen Informationen ZI auch von anderen Quellen, wie beispielsweise gespeicherten Informationen über die Trainingsanlage, den ersten vorgegebenen Bereich B1, die Einstellungen der Antennen A1, A2, der Funketiketten RF1, des Ortungsgeräts OG, etc., stammen.

Die zusätzlichen Informationen ZI beziehen sich allgemein auf Informationen über den ersten vorgegebenen Bereich B1, Informationen der ersten Funketiketten RF1 und/oder Informationen des Ortungsgeräts OG, die die Signalstärkeverläufe TS1, TS2 beeinflussen können. Diese Informationen ZI werden ebenfalls in das Maschinenlernmodul CNN eingespeist. Dieses kann diese Informationen ZI in der Trainingsphase verwenden, um im Einsatz bzw. der Anwendungsphase später ermittelte Signalstärkeverläufe genauer Positionen von Funketiketten zuordnen zu können. Die umfangreicheren Trainingsdaten des Maschinenlernmoduls CNN versetzen dieses in die Lage, eine zuverlässige Bestimmung der Position von Funketiketten auch bei einem veränderten Aufbau der Anlage durchzuführen.

Fig. 2 veranschaulicht in schematischer Darstellung einen bestimmungsgemäßen Betrieb des Ortungsgeräts OG, das durch das oben beschriebene Training des Maschinenlernmoduls CNN konfiguriert wurde. Außer auf dem zum Training verwendeten Ortungsgerät OG kann das trainierte Maschinenlernmodul CNN auch von anderen gleichartigen oder ähnlichen Ortungsgeräten wie nachfolgend beschrieben verwendet werden.

Im bestimmungsgemäßen Betrieb soll das konfigurierte Ortungsgerät OG durch den Bereich B2 bewegte Objekte OBJ, die jeweils mit einem zweiten Funketikett RF2 versehen sind, anhand von empfangenen Funksignalen lokalisieren.

Zu diesem Zweck werden durch das Lesegerät R über die Antennen A1 und A2 Funkwellen in den Bereich B2 ausgestrahlt, die von einem jeweils darin befindlichen, an einem Objekt OBJ angebrachten zweiten Funketikett RF2 empfangen werden und dieses temporär mit Energie versorgen. Das jeweilige zweite Funketikett RF2 strahlt infolgedessen während seiner Bewegung durch den Bereich B2 ein Funksignal ab, das von den Antennen A1 und A2 empfangen und an das Lesegerät R weitergeleitet wird. Wie oben beschrieben, erfasst das Lesegerät R einen jeweiligen antennenspezifischen Signalstärkeverlauf TS1 bzw. TS2 des Funksignals und speist diesen zusammen mit der zugehörigen Antennenkennung ID1 bzw. ID2 in das trainierte Maschinenlernmodul CNN als Eingabesignal ein.

Anhand der eingespeisten, antennenspezifischen Signalstärkeverläufe TS1 und TS2 prognostiziert das trainierte Maschinenlernmodul CNN dann eine aktuelle Position PP des jeweils etikettierten Objekts OBJ bzw. Funketiketts RF2 sowie gegebenenfalls weitere Daten über die Bewegung des Objekts OBJ. Die prognostizierte aktuelle Position PP und gegebenenfalls die weiteren Bewegungsdaten werden schließlich vom konfigurierten Ortungsgerät OG bestimmungsgemäß ausgegeben.

In einer Ausgestaltung prognostiziert das Maschinenlernmodul CNN die Position PP des Funketiketts RF2 nur basierend auf den Signalstärkeverläufen TS1, TS2.

In einer alternativen Ausgestaltung kann das Maschinenlernmodul CNN zusätzlich weitere Informationen ZI verwenden, wie sie oben in Bezug auf Fig. 1 bereits beschrieben sind. Diese Informationen ZI können beispielsweise durch Sensoren S (Kameras, Lichtschranken, sonstige Sensoren) oder aus anderen Quellen, wie Datenbanken, Konfigurationseinstellungen etc. bestimmt werden.

Diese zusätzlichen Informationen ZI können während der Bestimmung der Position PP als Zusatzinformationen zur Verbesserung der Positionsbestimmung verwendet werden. Es ist jedoch auch möglich, basierend auf diesen Zusatzinformationen ZI ein Nachtraining des Maschinenlernmoduls CNN durchzuführen, falls erforderlich. Ein solches Nachtraining kann beispielsweise sinnvoll sein, wenn sich die Struktur des ersten Bereichs B1 stark von der Struktur des zweiten Bereichs B2 unterscheidet. Auch kann das Maschinenlernmodul CNN ein solches Nachtraining erfordern, wenn die Position PP mit einer zu hohen Unsicherheit ermittelt wird. Diese Unsicherheit kann beispielsweise in dem Maschinenlernmodul CNN selbst bestimmt werden.

Durch die Kombination aus Signalstärkeverläufen TS1, TS2 und zusätzlichen Informationen ZI, entweder nur in der Trainingsphase oder auch in der Anwendungsphase, kann das Maschinenlernmodul CNN ein allgemeineres Modell erstellen. Auf diese Weise ist das Modell auf viele Zielanlagen übertragbar, ohne für jede Zielanlage eine separate Trainingsphase zu benötigen. Dem Maschinenlernmodul CNN werden bereits in der Trainingsphase ausreichende Informationen bereitgestellt, so dass eine zuverlässige Übertragbarkeit und Bestimmung der Position von Funketiketten in verschiedenen Zielanlagen möglich ist.

Obwohl die vorliegende Erfindung anhand von Ausführungsbeispielen beschrieben wurde, ist sie vielfältig modifizierbar.

### Bezugszeichenliste

- A1, A2: Antenne
- B1, B2: Überwachungsbereich
- C: Kamera
- CNN: Maschinenlernmodul
- ID1, ID2: Antennenkennung
- OBJ: Objekt
- OG: Ortungsgerät
- OPT: Auswerteeinrichtung
- P: aktuelle Position
- PP: Ausgabesignal
- R: Lesegerät
- RF1, RF2: Funketikett
- TR: Bewegungstrajektorie
- TS1, TS2: Signalstärkeverlauf

## Patentansprüche

1. Verfahren zum Konfigurieren eines Ortungsgeräts (OG) zum Orten von Funketiketten (RF1, RF2), wobei das Verfahren die Schritte umfasst:
a) mehrmaliges Befördern von einem oder mehreren ersten Funketiketten (RF1) unter variierten Beförderungsbedingungen durch einen ersten vorgegebenen Bereich (B1), wobei jeweils
- eine aktuelle Position (P) eines jeweiligen ersten Funketiketts (RF1) mittels eines Lokalisierungssensors (C) erfasst wird, und
- ein Funksignal des jeweiligen ersten Funketiketts (RF1) durch das Ortungsgerät (OG) empfangen und ein jeweiliger Signalstärkeverlauf (TS1, TS2) des empfangenen Funksignals erfasst wird,
b) Erfassen von zusätzlichen Informationen (ZI) des ersten vorgegebenen Bereichs (B1), des jeweiligen ersten Funketiketts (RF1) und/oder des Ortungsgeräts (OG), wobei die Informationen Einfluss auf den Signalstärkeverlauf (TS1, TS2) haben,
c) Trainieren eines Maschinenlernmoduls (CNN) anhand der erfassten aktuellen Positionen (P), Signalstärkeverläufe (TS1, TS2) und der erfassten Informationen (ZI), um anhand zumindest eines Signalstärkeverlaufs eine korrespondierende aktuelle Position zu reproduzieren, und
d) Einrichten des Ortungsgeräts (OG), um Signalstärkeverläufe (TS1, TS2) empfangener Funksignale von zweiten Funketiketten (RF2), die durch einen zweiten vorgegebenen Bereich (B2) befördert werden, in das trainierte Maschinenlernmodul (CNN) einzuspeisen und anhand von dessen resultierenden Ausgabesignalen (PP) eine jeweilige aktuelle Position eines jeweiligen zweiten Funketiketts (RF2) zu ermitteln.

2. Verfahren nach Anspruch 1, **dadurch gekennzeichnet, dass** das Ortungsgerät (OG) dazu eingerichtet wird, die Signalstärkeverläufe (TS1, TS2) der empfangenen Funksignale der zweiten Funketiketten (RF2) und Informationen des zweiten vorgegebenen Bereichs (B2), des jeweiligen zweiten Funketiketts (RF2) und/oder des Ortungsgeräts (OG) in das trainierte Maschinenlernmodul (CNN) einzuspeisen und anhand von dessen resultierenden Ausgabesignalen (PP) eine jeweilige aktuelle Position eines jeweiligen zweiten Funketiketts (RF2) zu ermitteln.

3. Verfahren nach Anspruch 1 oder 2, **dadurch gekennzeichnet, dass** die zusätzlichen Informationen (ZI) des ersten vorgegebenen Bereichs (B1) und/oder des zweiten vorgegebenen Bereichs (B2) Umgebungsinformationen sind, die Störfaktoren der Funksignale darstellen.

4. Verfahren nach Anspruch 3, **dadurch gekennzeichnet, dass** die Umgebungsinformationen auf Bildinformationen und/oder Geometrieinformationen basieren.

5. Verfahren nach Anspruch 4, wobei das Erfassen der zusätzlichen Informationen (ZI) des ersten vorgegebenen Bereichs (B1) und/oder des zweiten vorgegebenen Bereichs (B2) eine Verarbeitung der Bildinformationen und/oder der Geometrieinformationen umfasst.

6. Verfahren nach einem der vorhergehenden Ansprüche, **dadurch gekennzeichnet, dass** die zusätzlichen Informationen (ZI) des jeweiligen ersten Funketiketts (RF1) und/oder des jeweiligen zweiten Funketiketts (RF2) zusätzliche Positionsinformationen sind, die von einem oder mehreren zusätzlichen Positionssensoren (S) erfasst werden.

7. Verfahren nach Anspruch 6, **dadurch gekennzeichnet, dass** die zusätzlichen Positionsinformationen eine Geschwindigkeit und/oder Größe des jeweiligen ersten oder zweiten Funketiketts (RF1, RF2) angeben.

8. Verfahren nach einem der vorhergehenden Ansprüche, **dadurch gekennzeichnet, dass** die zusätzlichen Informationen (ZI) des Ortungsgeräts (OG) Konfigurationsparameter des Ortungsgeräts (OG) sind.

9. Verfahren nach einem der vorhergehenden Ansprüche, **dadurch gekennzeichnet, dass** der Schritt c) des Trainierens des Maschinenlernmoduls (CNN) ein Erzeugen eines Kernmodells anhand der erfassten aktuellen Positionen (P) und der Signalstärkeverläufe (TS1, TS2) der ersten Funketiketten (RF1), das Erzeugen eines Vorverarbeitungsmodels anhand der erfassten aktuellen Positionen (P), der Signalstärkeverläufe (TS1, TS2) der ersten Funketiketten (RF1) und der erfassten zusätzlichen Informationen (ZI) und das Erzeugen eines Transformationsmodells durch Abbilden des Vorverarbeitungsmodells auf das Kernmodell aufweist, und dass das trainierte Maschinenlernmodul (CNN) das Transformationsmodell zum Ermitteln der Position eines zweiten Funketiketts (RF2) verwendet.

10. Verfahren nach einem der vorhergehenden Ansprüche, **dadurch gekennzeichnet, dass** das trainierte Maschinenlernmodul (CNN) an einem Einsatzort des Ortungsgeräts (OG) anhand von am Einsatzort erfassten Positionsdaten und erfassten zusätzlichen Informationen (ZI) des zweiten vorgegebenen Bereichs (B2), des jeweiligen zweiten Funketiketts (RF2) und/oder des Ortungsgeräts (OG) nachtrainiert wird.

11. Verfahren nach Anspruch 10, **dadurch gekennzeichnet, dass** eine Unsicherheit der Bestimmung der aktuellen Position (P) eines zweiten Funketiketts (RF2) bestimmt wird, und, wenn die Unsicherheit größer als ein vorgegebener Schwellwert ist, das trainierte Maschinenlernmodul (CNN) an dem Einsatzort des Ortungsgeräts (OG) nachtrainiert wird.

12. Verfahren nach Anspruch 11, **dadurch gekennzeichnet, dass** das trainierte Maschinenlernmodul (CNN) bestimmt, welche Trainingsdaten erforderlich sind.

13. Verfahren zum Orten von Funketiketten (RF1, RF2), wobei das Verfahren das Konfigurieren eines Ortungsgeräts (OG) gemäß einem der vorhergehenden Ansprüche und das Ermitteln einer aktuellen Position (PP) eines zweiten Funketiketts (RF2) mittels des konfigurierten Ortungsgeräts (OG) aufweist.

14. Anordnung zum Konfigurieren eines Ortungsgeräts (OG) zum Orten von Funketiketten (RF1, RF2), wobei die Anordnung zum Ausführen der Verfahrensschritte eines Verfahrens gemäß einem der Ansprüche 1 bis 12 ausgebildet ist.

15. Ortungsgerät (OG) zum Orten von Funketiketten (RF1, RF2), wobei das Ortungsgerät (OG) dazu ausgebildet ist, das Verfahren gemäß einem der Ansprüche 1 bis 13 auszuführen.
